# EUROPÄISCHE PATENTSCHRIFT

(11) **EP 3 570 077 B1**
(45) Veröffentlichungstag und Bekanntmachung des Hinweises auf die Patenterteilung: **09.12.2020**
(21) Anmeldenummer: 19165887.1
(22) Anmeldetag: 28.03.2019
(51) Int. Cl.: G02B 5/124, G02B 5/02

(54) **RETROREFLEKTOR MIT OPTIKELEMENTEN ZUR LICHTPROJEKTION UND KODIERUNG UND VERWENDUNG DES RETROREFLEKTORS**
RETROREFLECTOR WITH LENS ELEMENTS FOR LIGHT PROJECTION AND CODING AND USE OF THE RETROREFLECTOR
RÉTRORÉFLECTEUR POURVU D'ÉLÉMENTS OPTIQUES DESTINÉ À LA PROJECTION DE LUMIÈRE ET AU CODAGE ET UTILISATION DU RÉTRORÉFLECTEUR

(30) Priorität: 18.05.2018 DE 102018112043
(43) Veröffentlichungstag der Anmeldung: 20.11.2019
(73) Patentinhaber: Gubela, Hans-Erich, 77876 Kappelrodeck (DE)
(72) Erfinder: GUBELA, Hans-Erich Jr., 77876 Kappelrodeck (DE); GUBELA, Hans-Erich, 77887 Sasbachwalden (DE)
(74) Vertreter: Patentanwälte Bregenzer und Reule Partnerschaftsgesellschaft mbB

(56) Entgegenhaltungen:
- WO-A2-2006/136381
- DE-A1- 4 117 911
- DE-A1- 10 216 579
- DE-A1- 19 615 529
- DE-C1- 3 230 159
- US-A- 1 671 086

## Beschreibung

Die Erfindung betrifft einen Retroreflektor, der aus einem oder einer Vielzahl von Licht reflektierenden Tripelspiegeln besteht.

In der bisherigen Patentliteratur werden vielfältige Methoden aufgezeigt, um einstrahlendes Licht zu reflektieren und das reflektierte Licht zu bündeln oder gleichmäßig oder ungleichmäßig zu verteilen. Dazu werden Reflexflächen aus Tripelspiegeln mit unterschiedlichen Tripelstrukturen verwendet.

Die verschiedenen Tripelspiegel-Strukturen bestehen aus drei Teilflächen, die zueinander im Rechten Winkel stehen. Um das reflektierte Licht zu verteilen werden die Winkel der Tripelspiegel-Teilflächen häufig abweichend vom Rechten Winkel zueinander angeordnet. Auch wurden in der Literatur Vorschläge gemacht, die Oberfläche der Tripelspiegel-Teilflächen zu überwölben, zum Beispiel 1974 in der US 3,833,285 von Heenan und 1996 die DE 4429 683 C1 von Hans-Erich Gubela sen. Zur Zeit wird auch experimentiert, um Tripel-Teilflächen als Freiformflächen auszubilden, denn Freiformflächen, die die Größe einer Spiegeltripel-Teilfläche haben, können nicht so frei gestaltet werden, wie Linsen oder besser Linsenarrays, wie sie in dieser Erfindung vorgeschlagen werden. Die Ergebnisse der angestrebten Lichtverteilung sind äußerst unbefriedigend. Auch werden Experimente durchgeführt, die Lichteintrittsfläche zu modifizieren. Keine der bisherigen Methoden zur Modifikation von reflektierenden Folien oder Reflektoren ermöglicht eine gezielte Lichtverteilung mit allen Freiheitsgraden.

Aus der DE 32 30 159 C1 ist ein Retroreflektor bekannt, dessen Tripelspiegel Spiegelflächenelemente aufweisen, an deren Rückseite Piezoelemente angeordnet sind. Aus der DE 196 15 529 A1 ist ein Retroreflektor mit Tripelspiegelprismen bekannt, auf dessen Spiegelflächen im Abstand zur dihedralen Kante jeweils ein Heizelement aufgeklebt ist. Aus der WO 2006/136381 A2 ist ein Reflektor bekannt, dessen Tripel an der Lichteintrittsfläche mit einem Diffraktionsmuster versehen sind. Aus der DE 41 17 911 A1 ist ein mikroprismatisches, rückstrahlendes Material bekannt.

Die vorliegende Erfindung löst das Problem der gezielten Lichtverteilung des reflektierten Lichts.

Die Erfindung ist durch die unabhängigen Ansprüche 1 und 10 definiert. Bevorzugte Ausführungsbeispiele sind durch die abhängigen Ansprüche 2-9 und 11 definiert.

Der erfindungsgemäße Tripelspiegel besitzt drei Spiegelflächen, hier als Tripelspiegel-Teilflächen genannt. Auf diesen Tripelspiegel-Teilflächen sind auf einer oder zwei oder allen drei Tripelspiegel-Teilflächen zusätzlich optische Elemente angeordnet. Die auf den Tripelspiegel-Teilflächen angeordneten optischen Elemente sind in ihrer Größe immer kleiner als die Tripelspiegel-Teilflächen, das heißt, die angeordneten Optiken sind immer von planen Flächen der Tripelspiegel-Teilfläche umgeben. Sie sind optisch wirksam in dem Sinne, dass auf sie treffendes Licht nicht so reflektiert wird wie von den planen Flächen der Tripelspiegel-Teilflächen. Die optischen Elemente sind Vertiefungen in der spiegelnden Außenfläche, oder sie stehen aus der spiegelnden Außenfläche hervor und sind einstückig mit dem Reflektorkörper ausgebildet, oder sie sind als optische Linsen, insbesondere Zylinderlinsen, ausgebildet.

Eine, zwei oder alle drei Teilflächen der erfindungsgemäßen Tripelspiegel tragen zusätzlich nicht vollflächige, die Tripelspiegel-Teilfläche bedeckende Optikelemente zur Modifizierung des reflektierten Lichts. Diese Tripelspiegel eignen sich zur planvollen Lichtverteilung des reflektierten Lichts, zur Kodierung von Lichtprojektionen und zur Erkennung eines Gegenstandes.

Die erfindungsgemäßen Tripelspiegel können in Tripelarrays angeordnet werden, wobei alle oder nur einige Tripelspiegel des Tripelarrays Tripelspiegel-Teilflächen besitzen mit Optikelementen. Die Tripelspiegel mit Optikelementen werden verwendet für Rückstrahler im Straßenverkehr, für Reflexfolien auf Schildern und Fahrzeugen, für Kfz-Kennzeichen, für Bildschirme und Bildschirmhintergrundbeleuchtung, zur 3D-Bilddarstellung, zur Herstellung von fälschungssicheren Sicherheitskennzeichen, Sicherungsmarkierung von Wertpapieren, Geldscheinen und Kreditkarten und/oder für die Sensorik zur Erkennung eines Gegenstandes.

Die Optikelemente können für lineare oder nichtlineare Optik konstruiert werden, abhängig davon, mit welcher Lichtart beziehungsweise mit welcher

Anregungslichtquelle der Tripelspiegel beleuchtet werden soll. Kohärentes oder nicht kohärentes Licht und die verschiedenen möglichen Polarisationen können berücksichtigt werden. Für eine komplexe Codierung können gegensätzliche Lichtquellen zugleich in der Anwendung berücksichtigt werden.

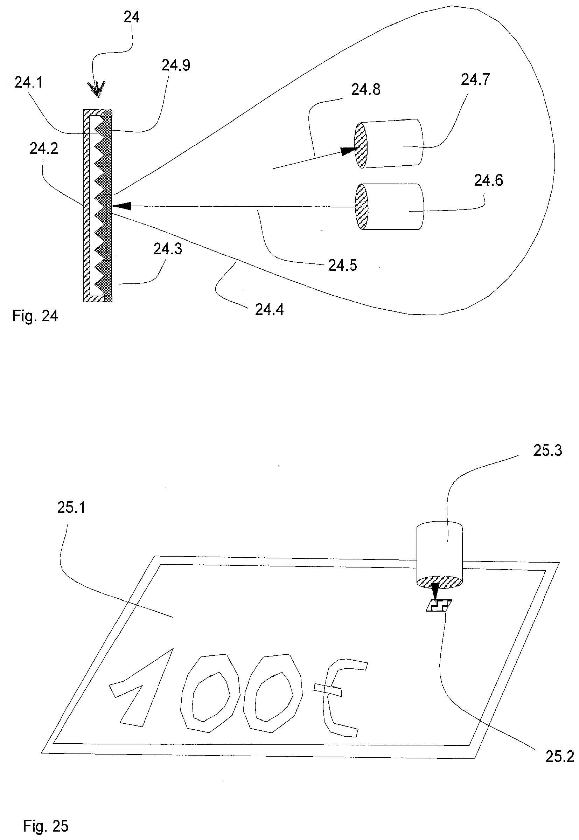

Auch können die Tripelspiegel einen Farbstoff enthalten, so dass diese nur für bestimmte Wellenlängen des Lichts transparent sind. Zum Beispiel kann der Reflektor 25 in Fig. 25 bzw. der Reflektorkörper 24.9 in Fig. 24 so eingefärbt werden, dass er für den Betrachter schwarz erscheint, jedoch für UV-Licht zur Retroreflexion geeignet ist und UV-Licht retroreflektiert.

So können auf einer Tripelspiegel-Teilfläche zum Beispiel eine oder mehrere konkave oder konvexe Linsen angeordnet werden, auch Zylinderlinsen oder Fresnellinsen und/oder Linsenarrays. Ebenso können Diffuser, Rauhigkeitsstrukturen, Strahlteiler, Prismen, Periodische Sinusstrukturen Freiformstrukturen oder diffraktive Strukturen (DOE) verwendet werden.

Bei der Gestaltung kann der Konstrukteur entscheiden, ob das Licht im Tripelspiegel auf einer, zwei oder drei Tripelspiegel-Teilflächen durch optische Elemente verändert werden soll. Durch die Verwendung von Optiken auf mehr als einer Tripelspiegel-Teilfläche des Tripelspiegels entstehen mehrere unterschiedliche Reflexionsprojektionen durch die 6 möglichen Lichtwege, die durch einen Tripelspiegel laufen. Das zu reflektierende Licht dringt über die Lichteintrittsfläche des Tripelspiegels ein und trifft auf die Tripelspiegel-Teilflächen. Bezeichnet man die Tripelspiegel-Teilflächen mit A,B, und C, so durchläuft den Tripelspiegel der erste Weg des Lichts über A nach B zu C oder A,C,B, der zweite über B,C,A oder B,A,C, der dritte über C,A,B oder C,B,A. Jede Tripelspiegel-Teilfläche spiegelt das Licht auf mindestens eine der beiden benachbarten Tripelspiegel-Teilflächen, mit denen die Tripelspiegel-Teilfläche eine gemeinsame Kante besitzt.

Betrachtet man die drei jeweils gewählten Lichtwege, so kommt die Spiegelung der 3 Lichtwege hinzu, so dass insgesamt 6 Lichtwege 6 Projektionen erzeugen, wenn das Licht den Tripelspiegel wieder über die Lichteintrittsfläche des Tripelspiegels verlässt.

Der Konstrukteur kann entscheiden, ob alle Tripelspiegel eines Arrays oder nur wenige Tripelspiegel zusätzliche Optikelemente auf den Tripelspiegel-Teilflächen enthalten sollen. So können Tripelspiegel-Arrays gestaltet werden, die je nach der Richtung des einfallenden Lichts oder je nach Position des Beobachters reflektiertes Licht unterschiedlich projizieren.

Durch die moderne Computertechnik ist es möglich geworden, den Verlauf des reflektierten Lichts als refraktive Strahlenoptik oder als Verlauf von Wellenfronten zu berechnen und damit eine gezielte reflektierte Lichtverteilung zu planen durch Einsatz verschiedener Optikelemente auf den Tripelspiegel-Teilflächen. Die erfindungsgemäße Verwendung von zusätzlichen Optikelementen auf den Tripelspiegel-Teilflächen ermöglicht alle Freiheitsgrade zur Gestaltung des reflektierten Lichtmusters und dessen Projektion.

Zum Beispiel im Straßenverkehr soll ein an der Straßenseite aufgestellter Reflektor sowohl vom Pkw-Fahrer als auch von einem wesentlich höher sitzenden Fahrer eines Lastkraftwagens gesehen werden. Das von den niedriger positionierten Scheinwerfern ausgesandte Licht muss reflektiert werden und ein Lichtbündel zu der Augenhöhe des Pkw-Fahrers und ein weiteres Lichtbündel in die Augenhöhe des Lastkraftwagenfahrers gesandt werden. Mit den bisherigen Methoden zur Lichtverteilung eines Tripels entsteht bei der Lichtverteilung ein großer Energieverlust. Durch die gezielte Lichtverteilung, wie die vorliegende Erfindung ermöglicht, kann das reflektierte Licht auf die zwei geforderten Lichtbündel beschränkt werden. Ebenso kann für mehrspurige Straßen das Licht gezielt für jede Fahrspur konzentriert werden.

Ein Beispiel in der Sensorik macht die Möglichkeiten des erfindungsgemäßen Tripelspiegels deutlich. (Fig. 24) Für Lichtschranken werden ein Sender 24.6 und ein Empfängerelement 24.7 verwendet. Das vom Sender ausgesandte Licht 24.5 wird reflektiert und zum Empfänger ausgerichtet. Sind Sender und Empfänger im Winkel zum Reflektor in unterschiedlicher Höhe angeordnet, so muss das reflektierte Licht zum Empfänger umgelenkt werden. Um einen Energieverlust zu vermeiden, sollte das Licht nicht gestreut, sondern als Lichtbündel auf den Empfänger ausgerichtet sein.

Jedoch wie soll der Empfänger sicher sein, dass das empfangene Licht vom Reflektor stammt? Das reflektierte Licht könnte aus einer anderen Quelle, zum Beispiel von Licht reflektierender Sicherheitskleidung eines Arbeiters stammen. Auch die bekannten Polfilter-Lichtschranken werden durch andere Tripelflächen getäuscht. Die Folge wäre, dass der Sensor glaubt, die Strecke zwischen Sender und seinem zugehörigen Sensorreflektor wäre frei. Das könnte zu gefährlichen Unfällen führen.

Der Sensor muss also informiert werden, dass das reflektierte Licht tatsächlich von seinem ihm zugehörigen Tripelreflektor stammt. Die Information kann der erfindungsgemäße Tripelspiegel geben, indem er eine einzigartige Lichtfigur projiziert, zum Beispiel zwei Lichtpunkte, die der Sensor mit einer vorgegebenen Lichtfigur vergleicht. Stimmt die reflektierte Projektion mit der Vorlage überein, kann der Sensor sicher sein, dass er seinen ihm zugehörigen Reflektor sieht und dass die Strecke zwischen Sensor und Reflektor frei ist.

Die beispielhaften zwei Lichtpunkte sind sehr einfach mit dem erfindungsgemäßen Tripelspiegel zu erzeugen. Der erste Punkt entspricht der Reflektion des Tripelspiegels über die unbehandelten Tripelspiegel-Teilflächen. Der zweite Punkt, also das zweite Signal für den Sensor, wird durch eine kleine Linse oder abweichende kleine Kante (Prisma) auf der Oberfläche einer Tripelspiegel-Teilfläche erzeugt.

Auch kann ein Array aus den erfindungsgemäßen Tripelspiegeln so beschaffen sein, dass abhängig von dem Durchmesser des empfangenen Sensorlichtstrahles unterschiedlich modifizierte Tripelspiegel getroffen werden und das reflektierte Licht dadurch unterschiedlich in seiner Gesamtheit modifiziert wird.

Besonders in Lagerregalen bewegen sich automatische Ladegeräte, die mit einem Reflektor ausgerüstet sind. Durch die wechselnde Entfernung zum Sensor, weil unterschiedlich weit angeordnete Regalfächer angefahren werden, muss das reflektierte Licht stark gebündelt sein, um möglichst große Reichweiten mit geringem Energieverlust zu erzielen. Sind im Sensor die Sendereinheit und die Empfangseinheit auf unterschiedlichen Achsen zum Reflektor angeordnet, so kann das reflektierte Strahlbündel die Empfangseinheit nicht mehr erreichen, wenn der Abstand zum Reflektor zu gering wird. Denn je näher der Reflektor an den Sensor heranfährt, umso größer wird der Winkel zu der Empfangseinheit. Für diesen Fall befinden sich im Tripelarray des Reflektors eine begrenzte Anzahl erfindungsgemäßer Tripelspiegel, die ein zweites, aber schwaches Lichtbündel in einem Winkel reflektieren, das nur im Nahbereich die Empfangseinheit trifft. Dagegen im Fernbereich wirkt die Überzahl der übrigen Tripelspiegel, die ein starkes Lichtbündel zum Empfänger sendet, weil aus der Ferne der Winkel zwischen Sender und Empfänger bezogen zum Reflektor gering ist und das reflektierte Lichtbündel auf den Sender und zugleich auf den Empfänger trifft.

Bei reflektierenden Kfz-Kennzeichen gibt es seit 1972 die DE 21 18 822 C3 von Hans-Erich Gubela, ein Verfahren, um geprägte Nummernschilder fälschungssicher zu machen, indem beim Prägen der Buchstaben und Zahlen in das Kfz-Kennzeichen, das aus einem Tripelspiegel-Array besteht, einige Tripelspiegel des Arrays irreversibel zerdrückt werden. Das fälschende Überlackieren einer anderen Nummer wäre von weitem zu erkennen, weil die durch das Prägen zerstörten Teile des Tripelarrays nicht reflektieren und nahezu schwarz erscheinen.

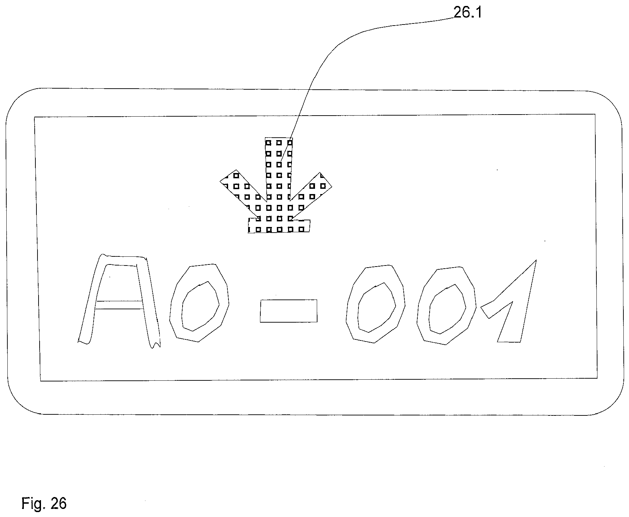

Mit dem erfindungsgemäßen Tripelspiegel lassen sich nun zusätzliche fälschungssichere Sicherheitsmerkmale in das Tripelarray des Auto-Kennzeichen ein konstruieren. (Fig. 26) Werden zum Beispiel einige Tripelspiegel in das Array eingefügt, die auf einer oder mehreren Tripelspiegel-Teilflächen zusätzliche Optiken tragen (26.1), so kann man damit ein Muster setzen, das zum Beispiel das Muster eines Hoheitszeichens projiziert, das sich deutlich von dem übrigen Tripelarray abhebt und schon mit bloßem Auge zu erkennen ist. Denn schon geringe optische Störungen in einem Tripelarray lassen sich bei der projizierten Reflexion erkennen.

Um solch komplexe Tripelarrays, die die erfindungsgemäßen Tripelspiegel enthalten, nachzubilden, ist ein erheblicher technischer Aufwand erforderlich. Tripelspiegel, die Tripelspiegel-Teilflächen enthalten, auf denen zusätzliche Optikelemente aufgebracht sind, sind wegen ihrer Transparenz und Mikronisierung äußerst schwer zu analysieren. Für jeden verwendeten Tripelspiegel müssen die darin zusätzlichen enthaltenen Optiken und ihre Position ermittelt werden. Schon geringe Abweichungen der Analyse würden beim Nachbau ein erkennbar abweichendes Reflexionsmuster erzeugen.

Deshalb sind die erfindungsgemäßen Tripelspiegel als Array wie ein dreidimensionaler Code verwendbar, der je nach Beleuchtung 6 sich deckende oder teil-deckende oder nicht deckende Lichtmuster als Reflexion erzeugt.

Durch die vielfältigen Möglichkeiten des Tripelarrays und die darin verwendeten erfindungsgemäßen Tripelspiegel, die mit Optiken auf den Tripelspiegel-Teilflächen versehen sind, entsteht eine dreidimensionale Codierung mit Licht. Abhängig von der verwendeten Lichtart, der Polarisation und Wellenlänge und Abstand zum Sensor im Raum wirkt die Kodierung als dreidimensionale Lichtprojektionswolke. In dieser ist je nach Position des Beobachters oder Sensors in der Lichtwolke ein zweidimensionales Lichtmuster detektierbar.

Bei sich deckenden Lichtmustern müsste ein Reflexmuster von zum Beispiel 5 mm Durchmesser bis zur Größe der Wellenlänge des verwendeten Lichts aufgelöst werden, um überhaupt die Projektion des reflektierten Lichts zu analysieren. Aus dieser Analyse müsste man dann versuchen, auf die verwendeten Optiken in den Tripelspiegeln, die Größe der Optiken, die Positionen auf den Tripelspiegel-Teilflächen und die Gestalt der Optiken, die miteinander wirken, rückzuschließen.

So wie in der Astronomie eine beobachtete Galaxie, aus einer Vielzahl von leuchtenden und nicht leuchtenden dreidimensionalen Strukturen besteht, kann man die Galaxie jedoch nur als zweidimensionales Bild empfangen und muss versuchen über die Anwendung von Lichtabsorptionskurven und theoretische Schwerkraftverteilungen Modelle der beobachteten Galaxie zu erstellen. Bei einem Array, das erfindungsgemäße Tripelspiegel enthält, ist die dreidimensionale Struktur der Lichtwolke auch nur zweidimensional zu erfassen. Aber man kann diese Lichtwolke mit einem Sensor umkreisen, was man bei einer Galaxie nicht kann.

Die Kodierung mit den erfindungsgemäßen Tripelspiegeln eignet sich also besonders bei mikronisierten Tripelspiegel-Arrays auf Sicherheitsetiketten, Wertpapieren, Kreditkarten und Geldscheinen. Wird eine Kreditkarte (Fig. 26) im oder am Geldautomaten oder einer Kasse von einem Sensor erfasst, kann das projizierte Reflexionsmuster bei einem oder mehreren vorgegebenen Lichteinfallsrichtungen und Wellenlängen mit Vergleichsvorgaben vom Sensor bei einem oder mehreren vorgegebenen Abständen zwischen dem Tripelspiegel und dem Sensor verglichen werden.

Die vorliegende Erfindung ergibt so viele Möglichkeiten der Komplexität, dass eine Kopie oder Entschlüsselung dieses Lichtcodes äußerst schwierig ist.

Die weitere Besonderheit dieser Erfindung ist, dass dieser Code äußerst einfach herstellbar ist. Natürlich könnte man metallische Prägestempel mit 5-Achsen-Fräsen herstellen, um den Code in Tripelspiegelform darzustellen. Dagegen wird empfohlen, die erfindungsgemäße Tripelspiegelstruktur als Tripelspiegel-Array im Computer zu designen und dann mit einem 3D-Drucker als transparente Struktur zu erzeugen.

Man kann bei der Herstellung von großen Flächen auch ein Muster in Metall oder Kunststoff im 3D-Drucker erzeugen kann und dieses 3D-gedruckte Element dann als Prägestempel verwenden.

So genannten würfelförmige "Full-Cube" Tripelarrays sind positiv und negativ gleich. Andere Tripelspiegelformate erfordern zunächst eine Negativherstellung, von der man dann das Positiv zum Beispiel als Kopie galvanisch erzeugt. Bei Tripelstrukturen, die in positiver und negativer Form nicht gleich sind, wird vorgeschlagen, im CAD des Computers bereits den Wechsel von Positiv zu negativ zu vollziehen, was in den modernen CAD Programm bekannt ist. So kann aus dem CAD-Programm des Computers direkt die positive oder negative Form des Arrays 3D-gedruckt werden.

Soll als Druckwerkstoff ein transparenter Werkstoff verwendet werden, so wird vorgeschlagen, einen Lack zu verwenden, der mit UV-Licht gehärtet wird. Der 3D-Drucker druckt also die optische Struktur in feinen Lackschichten übereinander, die in der Summe als Lackschichtenstapel das dreidimensionale Tripelspiegel-Array entstehen lässt.

Soll von einem Tripelspiegel-Array eine Kopie gezogen werden, so wird für das Original oder für die Kopie ein elastischer Werkstoff empfohlen, insbesondere Silikone.

Die bisherige Darstellung des erfindungsgemäßen Tripelspiegels und seine variable Verwendung in einem Array, gebildet aus mehreren und gleichen und/oder ungleichen Tripelspiegeln lässt bereits eine riesige Vielfalt von Kodierungen entstehen. Durch die Veränderung der Winkel der drei Tripelspiegel-Teilflächen zueinander nimmt die Variabilität zu.

Es wird vorgeschlagen, die Variabilität und Kodierung weiter zu erhöhen durch die Auswahl und/oder Kombination unterschiedlicher Tripelstrukturen, wie sie bereits aus der Literatur bekannt sind. In den folgenden Figuren werden einige grundsätzliche Tripelstrukturen aufgezeigt, die sich alle für die Konstruktion und Herstellung des erfindungsgemäßen Tripelspiegels mit Tripelspiegel-Teilflächen, die mit zusätzlichen Optiken versehen sind, eignen.

Besonders hervorzuheben aus den bekannten Tripelspiegelformaten ist der Gubela-Tripel der Fig. 11, Fig. 17, der wegen seiner Eigenart zu überraschenden Tripelspiegel-Arrays angeordnet werden kann. Diese Arrays verändern sich nochmals erheblich dadurch, dass die Achse der Tripel verändert wird. Die Fig. 22 und 23 zeigen ein Beispiel.

Bei den oben stehenden Anwendungsbeispielen und Variationen wurde voraus gesetzt, dass der erfindungsgemäße Tripelspiegel als reflektierender Spiegel verwendet wird. Das heißt, das Licht trifft lotrecht oder vom Lot abweichend auf die Tripeloberfläche, dringt in den Tripel ein und trifft auf die Tripelspiegel-Teilflächen, wird dann über die weiteren Tripelspiegel-Teilflächen gespiegelt und verlässt den Tripel wieder über die Lichteintrittsfläche.

Der erfindungsgemäße Tripelspiegel kann aber zur Kodierung auch anders verwendet werden. Er lässt sich auch von einer oder mehreren Tripelspiegel-Teilflächen rückseitig als Lichteintrittsfläche beleuchten. Dann wirkt der ursprüngliche Tripelspiegel als Prisma. Dieses Prisma kann nun wiederum auf der Lichteintrittsfläche eines Tripelspiegels angeordnet sein. Der erfindungsgemäße Tripelspiegel lässt sich also zur Kodierung auch als Prisma auf der Oberfläche eines Tripelarrays verwenden.

### Beschreibung zu den Figuren:

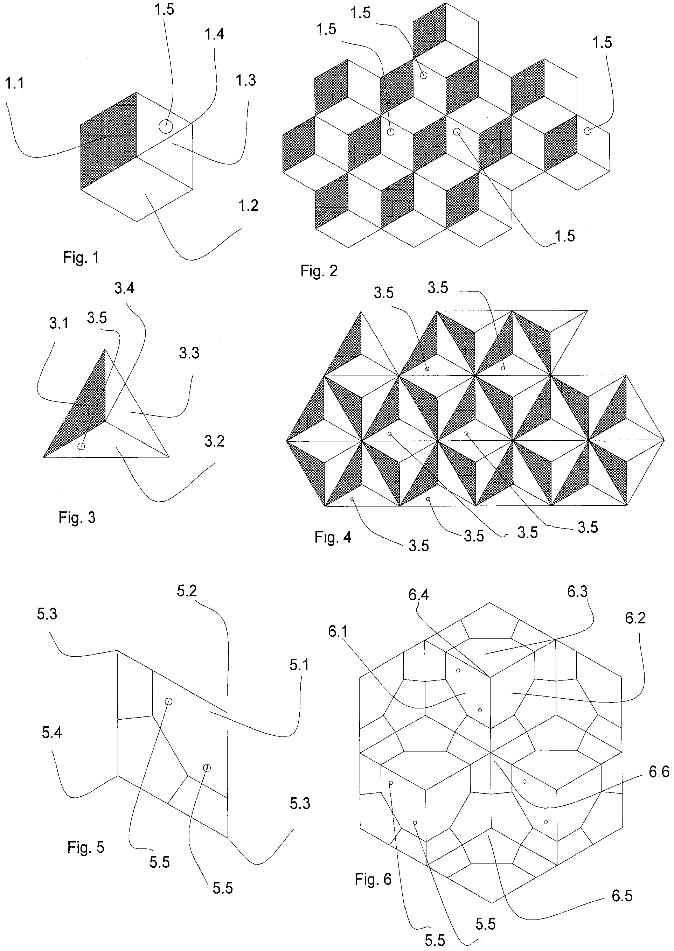

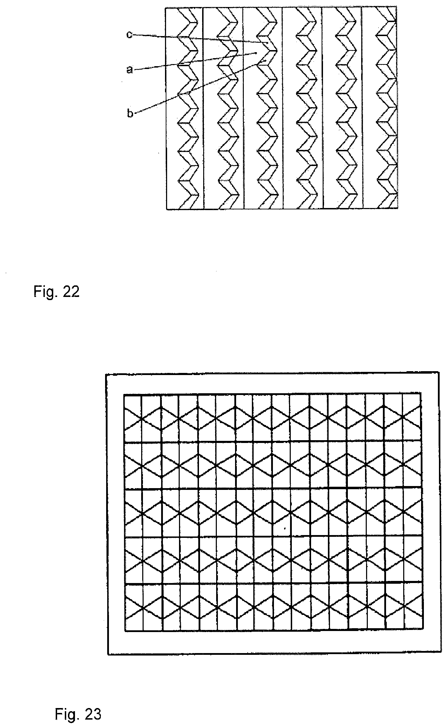

Die **Fig. 1 bis 21** zeigen verschiedene, bekannte, Formen von Tripelspiegeln. Alle Tripelspiegel besitzen jeweils drei Tripelspiegel-Teilflächen, die im Idealfall zueinander im Rechten Winkel stehen oder nur näherungsweise zueinander mit 90 Winkelgraden +/- 5° stehen. Jeder Tripelspiegel hat ein Tripelspiegel-Zentrum, in dem sich die drei Tripelspiegel-Teilflächen berühren. Von einer Lichtquelle ausgesandtes Licht wird über alle drei Tripelspiegel-Teilflächen gespiegelt und verlässt den Tripelspiegel in Richtung der Lichtquelle. Man nennt dieses Reflexionsverhalten Retroreflexion oder auch einfach Retroflektion. Gemäß der Erfindung sind die optischen Elemente der in den **Fig. 1 bis 21** gezeigten Retroreflektoren Vertiefungen in der spiegelnden Außenfläche oder sie stehen aus der spiegelnden Außenfläche hervor und sind einstückig mit dem Reflektorkörper, oder sie sind optische Linsen, insbesondere Zylinderlinsen. Fig. **22** zeigt ein nicht beanspruchtes Tripelspiegel-Array-Werkzeug und **Fig. 23** zeigt ein damit abgeformtes, nicht beanspruchtes, Tripelspiegel-Array. Die **Fig. 24 bis 26** zeigen Anwendungsbeispiele, die einen erfindungsgemäßen Retroreflektor aufweisen.

### Es zeigt

**Fig. 1** einen Kubus-Tripelspiegel, in der Literatur auch Perkin-Elmerpyramide genannt. Der Tripelspiegel erscheint würfelförmig. Die Projektion des Tripelspiegels ist ein Sechseck. Er besitzt die Tripelspiegel-Teilflächen 1.1, 1.2 und 1.3. Durch das Tripelspiegel-Zentrum 1.4, in dem sich alle drei Tripelspiegel-Teilflächen berühren, verläuft die Tripelspiegel-Achse und ist in der **Fig. 1** der tiefste Punkt. Die Tripelspiegel-Teilfläche 1.3 trägt ein optisches Element 1.5. Ein Kubus-Tripelspiegel ist bereits 1925 in der US 1,848,675 von J. C. Stimson beschrieben worden.
**Fig. 2** ein Tripelspiegel-Array gebildet aus Kubus-Tripelspiegeln der Fig. 1. Einige Tripelspiegel-Teilflächen tragen optische Elemente 1.5.
**Fig. 3** einen Pyramid-Tripelspiegel mit den Tripelspiegel-Teilflächen 3.1, 3.2 und 3.3 und dem Tripelspiegel-Zentrum 3.4 als tiefsten Punkt der Zeichnung. Die Projektion des Tripelspiegels ist ein Dreieck. Durch das Tripelspiegel-Zentrum 3.4, in dem sich alle drei Tripelspiegel-Teilflächen berühren, verläuft die Tripelspiegel-Achse und ist in der **Fig. 3** der tiefste Punkt. Die Tripelspiegel-Teilfläche 3.2 trägt ein optisches Element 3.5. Ein Pyramid-Tripelspiegel ist bereits 1923 in der US 1,671,086 von J. C. Stimson beschrieben worden.
**Fig. 4** ein Tripelspiegel-Array gebildet aus Pyramid-Tripelspiegeln der Fig. 3. An dem Array kann man geometrische Verwandtschaft zum Kubus-Tripel erkennen. Wenn jeder zweite Pyramid-Tripelspiegel wechselweise mit dem Tripelspiegel-Zentrum 3.4 nicht als tiefster, sondern als höchster Punkt der Zeichnung angelegt wäre, erhielte man ein Tripelarray wie in Fig. 2. Einige Tripelspiegel-Teilflächen tragen optische Elemente 3.5.
**Fig. 5** einen Rhombus, aus dem das Tripelspiegel-Array in **Fig. 6** gebildet werden kann. Die Rhombusecke 5.2 bildet in Fig. 6 aus drei Rhomben das Tripelzentrum 6.4. Drei aneinander gefügte Rhomben bilden mit der Tripelspiegel-Teilfläche 5.1 einen Tripelspiegel mit den Tripelspiegel-Teilflächen 6.1, 6.2, 6.3 und dem Tripelspiegel-Zentrum 6.4. Der Rhombus zeigt mit den weiteren Punkten 5.3 und 5.4 weitere Tripelspiegel-Zentren, durch die im Tripelarray die Tripelspiegel 6.5 und 6.6 gebildet werden. Die Tripelspiegel-Teilfläche 5.1 trägt ein optisches Element 5.5
**Fig. 6** ein Tripelspiegel-Array gebildet aus Rhomben der **Fig. 5** mit drei verschiedenen Tripelspiegeln und den Tripelspiegel-Zentren 6.4, 6.5 und 6.6. Das Tripelspiegel-Array der **Fig. 6** ist seit den 60-ger Jahren des letzten Jahrhunderts von Hans Gubela, Wuppertal, für Rückstrahler an Straßen verwendet worden. Durch unterschiedlich geringe Abweichungen vom Rechten Winkel der Tripelspiegel-Teilflächen zueinander in den drei Tripelspiegeln des Tripelspiegel-Arrays mit den Tripelspiegel-Zentren 6.4, 6.5 und 6.6, konnte die Lichtverteilung des retroreflektierten Lichts variiert werden.

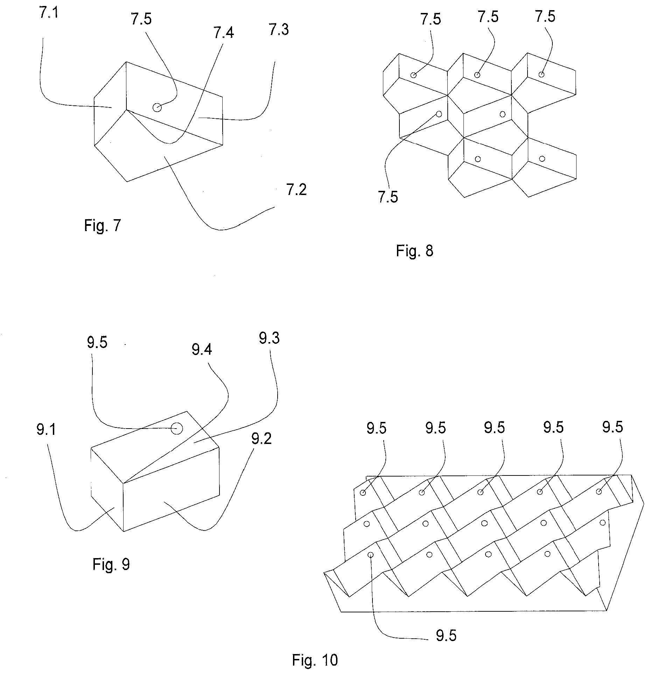

**Fig. 7** einen Weitwinkel-Tripelspiegel mit den Tripelspiegel-Teilflächen 7.1, 7.2, 7.3 und dem Tripelspiegel-Zentrum 7.4. Die Tripelspiegel-Teilfläche 7.3 trägt ein optisches Element 7.5. Ein Weitwinkel-Tripelspiegel ist 2002 beschrieben worden in der DE 102 16 579 A1 von Hans-Erich Gubela sen.
**Fig. 8** ein Tripelspiegel-Array gebildet aus Weitwinkel-Tripelspiegeln der Fig. 7. Einige Tripelspiegel-Teilflächen tragen die optischen Elemente 7.5.
**Fig. 9** einen Umlenk-Tripelspiegel mit den Tripelspiegel-Teilflächen 9.1, 9.2, 9.3 und dem Tripelspiegel-Zentrum 9.4. Die Tripelspiegel-Teilfläche 9.3 trägt ein optisches Element 9.5. Ein Umlenk-Tripelspiegel ist 2002 beschrieben worden in der DE 101 19 671 A1 von Hans-Erich Gubela sen.
**Fig. 10** ein Tripelspiegel-Array gebildet aus Umlenk-Tripelspiegeln der Fig. 9. Einige Tripelspiegel-Teilflächen tragen die optischen Elemente 9.5.

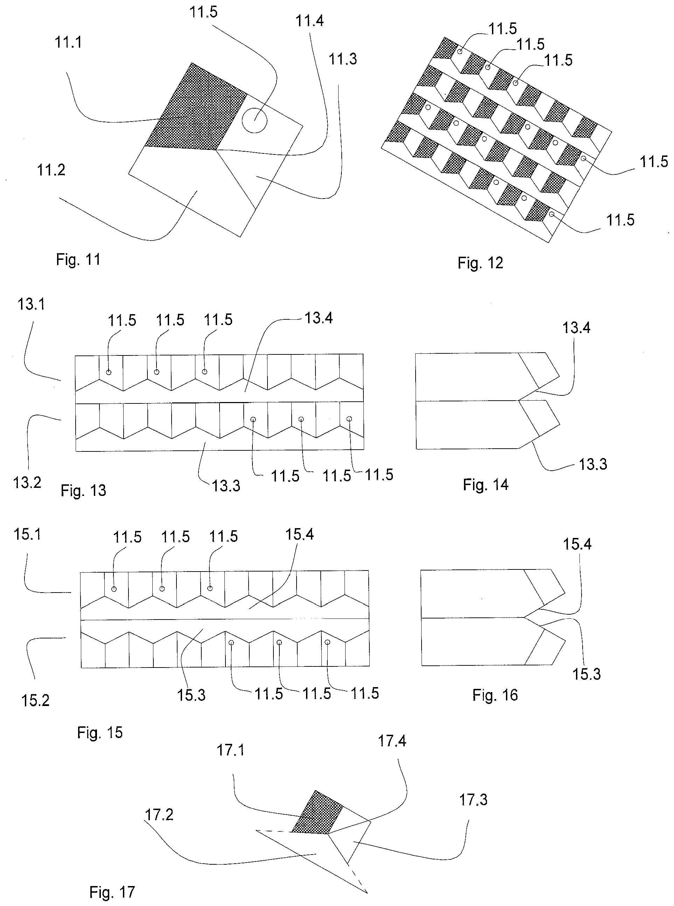

**Fig. 11** einen Gubela-Tripelspiegel mit den Tripelspiegel-Teilflächen 11.1, 11.2 und 11.3 und dem Tripelspiegel-Zentrum 11.4 als tiefsten Punkt der Zeichnung. Die Projektion der Idealform des Gubela-Tripelspiegels ist ein Quadrat. Die Tripelspiegel-Teilfläche 11.3 trägt ein optisches Element 11.5. Der Gubela-Tripelspiegel ist beschrieben 1995 in der DE 44 10 994 A1 von Hans-Erich Gubela sen.
**Fig. 12** ein beispielhaftes Tripelspiegel-Array gebildet aus Gubela-Tripelspiegeln der **Fig. 11****.** In dem beispielhaften Array sind alle Tripelspiegel in gleicher Ausrichtung angeordnet. Einige Tripelspiegel-Teilflächen tragen optische Elemente 11.5.
**Fig. 13** zwei Tripelspiegel-Stränge 13.1 und 13.2 gebildet aus Gubela-Tripelspiegeln mit gleicher Ausrichtung. Die Tripelspiegel-Teilflächen 11.2 bilden einen Strang 13.1 mit einem gemeinsamen Spiegelband 13.4. Der Strang 13.2 hat entsprechend ein Spiegelband 13.3. Die beiden Tripelspiegel-Stränge tragen die optischen Elemente 11.5.
**Fig. 14** die Werkzeuge zur Abformung der beiden Tripelspiegel-Stränge 13.1 und 13.2 im seitlichen Schnitt, so dass man erkennen kann, dass die Tripelspiegel-Teilflächen 11.1, 11.2 und 11.3 in zwei unterschiedlichen Ebenen liegen.
**Fig. 15** zwei Tripelstränge 15.1 und 15.2 gebildet aus Gubela-Tripelspiegeln mit gespiegelter Ausrichtung im Gegensatz zur Fig. 13. Die Tripelspiegel-Teilflächen 11.2 bilden einen Strang 15.1 mit einem gemeinsamen Spiegelband 15.4. Der Strang 15.2 hat entsprechend ein Spiegelband 15.3. Die beiden Tripelspiegel-Stränge tragen die optischen Elemente 11.5.
**Fig. 16** die Werkzeuge zur Abformung der beiden Tripelstränge 15.1 und 15.2 im seitlichen Schnitt. Man erkennt, dass die Tripelspiegel-Teilflächen 11.2 der einzelnen Tripelspiegel sich gegenüber liegen.
**Fig. 17** einen Gubela-Tripel mit den Tripelspiegel-Teilflächen 17.1, 17.2 und 17.3 und dem Tripelspiegel-Zentrum 17.4 als tiefsten Punkt der Zeichnung. Die Tripelspiegel-Teilfläche 17.2 ist durch die gestrichelten Linien vergrößert, die zeigen sollen, dass der Tripelspiegel, wenn er in einem Strang angeordnet ist, wie zum Beispiel 13.1, dann können auch die benachbarten Tripelspiegel-Teilflächen 17.2, weil sie ein gemeinsames Spiegelband 13.4 bilden, am Verlauf des Lichts im Tripelspiegel teilnehmen, wenn das einfallende Licht erheblich vom senkrechten Lichteinfall abweicht. Dieses Spiegelband 13.1 ist eine Besonderheit von Tripelspiegel-Arrays, die aus Gubela-Tripelspiegeln gebildet werden.

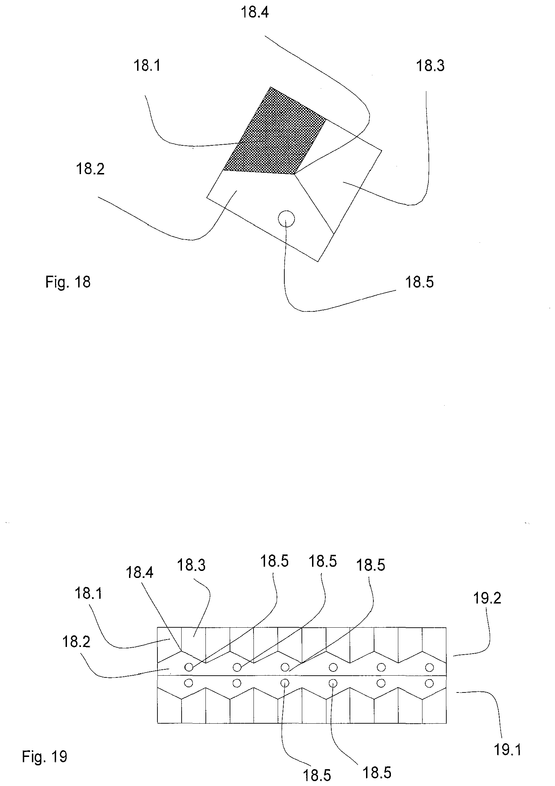

**Fig. 18** einen Gubela-Tripelspiegel mit den Tripelspiegel-Teilflächen 18.1, 18.2 und 18.3 und dem Tripelspiegel-Zentrum 18.4 als tiefsten Punkt der Zeichnung. Die Tripelspiegel-Teilfläche 18.2 trägt ein optisches Element 18.5.
**Fig. 19** zwei Tripelspiegel-Stränge 19.1 und 19.2, die sich spiegelbildlich gegenüber liegen. Die Tripelspiegel-Teilfläche bildet zusammen mit den benachbarten Tripelspiegeln ein Spiegelband, auf dem optische Elemente 18.5 angeordnet sind.

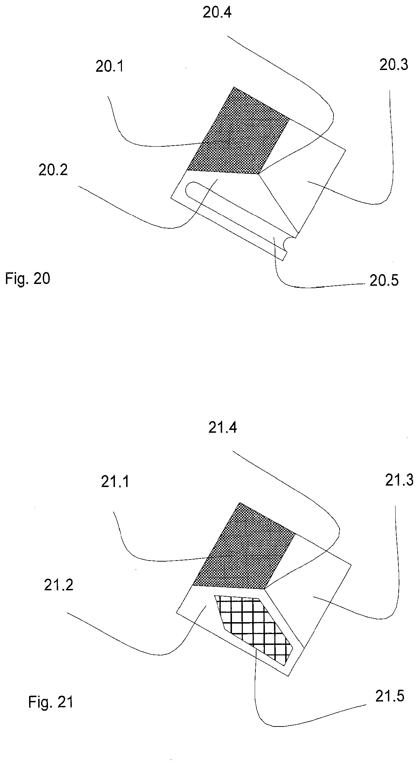

**Fig. 20** einen Gubela-Tripelspiegel mit den Tripelspiegel-Teilflächen 20.1, 20.2 und 20.3 und dem Tripelspiegel-Zentrum 20.4. Auf der Tripelspiegel-Teilfläche 20.2 ist eine Zylinderlinse 20.5 beispielhaft angeordnet. Dies ist eine Sonderausführung der Erfindung zur Anwendung auf Gubela-Tripelspiegeln, wenn die Tripelspiegel-Teilflächen ein Spiegelband bilden wie in Fig. 13, 15, 19. Dabei ist die Zylinderlinse deutlich kleiner als die Tripelspiegel-Teilfläche und berührt die Kante der Tripelspiegel-Teilfläche nur, wenn die Zylinderlinse im folgenden benachbarten Tripelspiegel auf dem gemeinsam gebildeten Tripelspiegel-Spiegelband fortgesetzt wird.
**Fig. 21** einen Gubela-Tripelspiegel mit den Tripelspiegel-Teilflächen 21.1, 21.2 und 21.3 und dem Tripelspiegel-Zentrum 21.4. Auf der Tripelspiegel-Teilfläche 21.2 ist eine optische Struktur, eine Metallschicht oder Farbschicht zusätzlich beispielhaft angeordnet. Es kann ein Linsenarray oder auch Fresnellinsenarray, ein Diffuser, ein Tripelspiegel-Array, eine diffraktive optische Struktur (DOE) 21.5, ein Array von Prismen, eine polarisierend wirkende Struktur sein, die zusätzlich dazu metallisiert ist, eine als Filter wirkende Struktur, eine Struktur die auf unterschiedliche Anregungslichtquellen unterschiedlich reagiert.
**Fig. 22** ein Tripelspiegel-Array-Werkzeug gebildet aus Gubela-Tripelspiegeln, das aus Tripelspiegeln besteht, deren Tripelspiegel-Achse aus der Lotrechten abweicht. Die Werkzeugflächen a, b und c bilden den Gubela-Tripelspiegel. Auch diese Tripelspiegel-Arrays können zusätzliche Optiken auf den Tripelspiegel-Teilflächen tragen. Die Zeichnung wurden entnommen aus der DE 10 2012 022 418 A1 dort Fig. 10, veröffentlicht 2014 von Hans-Erich Gubela sen.
**Fig. 23** eine Aufsicht auf ein vom Werkzeug abgeformtes Tripelspiegel-Array gebildet aus Gubela-Tripelspiegeln, das aus Tripelspiegeln besteht, deren Tripelspiegel-Achse aus der Lotrechten abweicht. Diese Fig. erläutert, dass ein Gubela-Tripelspiegel-Array bei einer Draufsicht ein unerwartetes Bild ergeben kann, das herkömmlichen Tripelspiegel-Arrays nicht ähnlich sieht. Die Zeichnung wurden entnommen in der **Fig. 22** aus der bereits zitierten DE 10 2012 022 418 A1 dort Fig. 11.
**Fig. 24** einen beispielhaften Reflektor oder Reflexfolie. Er besteht aus den erfindungsgemäßen Tripelspiegeln 24.1 und der Rückwand 24.2, die die Tripelspiegel schützen sollen und der Lichteintrittsfläche 24.3. Der Reflektor bzw. Retroflektor 24 weist einen Reflektorkörper 24.9 aus transparentem Material auf, dessen Vorderseite die Lichteintrittsfläche 24.3 aufweist und dessen der Lichteintrittsfläche 24.3 abgewandte Außenfläche durch die spiegelnden Teilflächen der Tripelspiegel 24.1 gebildet wird. Eine Reflexion der Tripelspiegel als reflektierte Lichtwolke 24.4 wird durch die Lichteinstrahlung 24.5 verursacht, die von der Lichtquelle 24.6 ausgesendet wurde. Ein Empfängersensor 24.7 steht in der Lichtwolke und empfängt an seiner Position einen Teil der Reflektion 24.8 der Tripelspiegel. Ist seine Position in der Lichtwolke vorbestimmt, dann empfängt er eine Lichtkodierung, die durch die in den Tripelspiegeln durch zusätzliche Optiken auf den Tripelspiegel-Teilflächen bestimmt ist. Entspricht diese Lichtkodierung seiner Vergleichsinformation, so kann der Sensor bestätigen, dass er das Tripelspiegel-Array sieht, das die gewünschte Lichtkodierung sendet.
**Fig. 25** einen beispielhaften Geldschein 25.1 der auch ein Wertpapier oder eine Ausweiskarte oder Kreditkarte sein kann, auf dem sich ein erfindungsgemäßer Tripelspiegel oder Tripelspiegel-Array 25.2 befinden, der von einem Sensor 25.3 abgetastet wird, indem der Sensor aus einer Lichtquelle einen Lichtstrahl oder Lichtwellenfronten aussendet und die Gesamtreflexion des oder der Vielzahl der Tripelspiegel empfängt und auswertet.
**Fig. 26** ein beispielhaftes Autokennzeichen, auf dem sich ein Tripelspiegel-Array befindet aus erfindungsgemäßen Tripelspiegeln. Das Autokennzeichen kann auf der gesamten Oberfläche als Reflektor ausgebildet sein, wie 1972 in der DE 21 18 822 C3 von Hans-Erich Gubela vorgeschlagen. Das Tripelspiegel-Array 26.1 wäre nur eine zusätzliche Sicherheitsmarkierung, die in Ihrer Form schon mit dem bloßem Auge erkennbar wäre, aber auch Lichtkodierungen enthalten kann, die zusätzlich mit einem Sensor überprüft werden können, ob es sich um die gewünschte Struktur handelt oder eine Fälschung ist.

## Patentansprüche

1. Retroreflektor mit einem oder mehreren Tripelspiegeln (24.1), wobei jeder Tripelspiegel (24.1) drei Teilflächen (1.1, 1.2, 1.3; 3.1, 3.2, 3.3; 6.1, 6.2, 6.3; 7.1, 7.2, 7.3; 9.1, 9.2, 9.3; 11.1, 11.2, 11.3; 17.1, 17.2, 17.3; 18.1, 18.2, 18.3; 20.1, 20.2, 20.3; 21.1, 21.2, 21.3) aufweist, die an drei dihedralen Kanten paarweise aneinander angrenzen und Dihedralwinkel von 90° ± 5° einschließen und sich in einem Tripelspiegel-Zentrum (1.4; 3.4; 6.4; 7.4; 9.4; 11.4; 17.4; 18.4; 20.;4; 21.4) berühren, wobei der Retroreflektor einen Reflektorkörper (24.9) aus lichtdurchlässigem oder teiltransparentem Material aufweist, der eine durch die Teilflächen gebildete spiegelnde Außenfläche aufweist, wobei mindestens einer der Tripelspiegel ein Tripelspiegel mit bevorzugter Geometrie ist, wobei die bevorzugte Geometrie dadurch definiert ist, dass in mindestens einer Teilfläche (1.3; 3.2; 5.1; 7.3; 9.3; 11.3; 18.2; 20.2; 21.2) jedes Tripelspiegels mit bevorzugter Geometrie mindestens ein optisch wirksames optisches Element (1.5; 3.5; 5.5; 7.5; 9.5; 11.5; 18.5; 20.5) angeordnet ist, wobei jedes optische Element (1.5; 3.5; 5.5; 7.5; 9.5; 11.5; 18.5; 20.5) im Abstand zu den dihedralen Kanten angeordnet ist, die die Teilfläche (1.3; 3.2; 5.1; 7.3; 9.3; 11.3; 18.2; 20.2; 21.2) begrenzen, in der das betreffende optische Element (1.5; 3.5; 5.5; 7.5; 9.5; 11.5; 18.5; 20.5) angeordnet ist, und wobei die spiegelnde Außenfläche einer Lichteintrittsfläche (24.3) des Reflektorkörpers (24.9) abgewandt ist, **dadurch gekennzeichnet, dass** mindestens eines der optischen Elemente (1.5; 3.5; 5.5; 7.5; 9.5; 11.5; 18.5; 20.5) eine Vertiefung in der spiegelnden Außenfläche ist und/oder dass mindestens eines der optischen Elemente (1.5; 3.5; 5.5; 7.5; 9.5; 11.5; 18.5; 20.5) aus der spiegelnden Außenfläche vorsteht und einstückig mit dem Reflektorkörper (24.9) ausgebildet ist und/oder dass mindestens eines der optischen Elemente (1.5; 3.5; 5.5; 7.5; 9.5; 11.5; 18.5; 20.5) eine optische Linse, insbesondere eine Zylinderlinse, ist.

2. Retroreflektor nach Anspruch 1, **dadurch gekennzeichnet, dass** die Teilflächen (1.1, 1.2, 1.3; 3.1, 3.2, 3.3; 6.1, 6.2, 6.3; 7.1, 7.2, 7.3; 9.1, 9.2, 9.3; 11.1, 11.2, 11.3; 17.1, 17.2, 17.3; 18.1, 18.2, 18.3; 20.1, 20.2, 20.3; 21.1, 21.2, 21.3) jeweils einen viereckigen Umriss aufweisen.

3. Retroreflektor nach Anspruch 2, **dadurch gekennzeichnet, dass** die Teilflächen (1.1, 1.2, 1.3; 3.1, 3.2, 3.3; 6.1, 6.2, 6.3; 7.1, 7.2, 7.3; 9.1, 9.2, 9.3; 11.1, 11.2, 11.3; 17.1, 17.2, 17.3; 18.1, 18.2, 18.3; 20.1, 20.2, 20.3; 21.1, 21.2, 21.3) jeweils einen quadratischen Umriss, einen rechteckigen Umriss, einen trapezförmigen Umriss oder einen drachenförmigen Umriss mit zwei Paaren aneinander angrenzender, gleich langer Kanten aufweisen.

4. Retroreflektor nach Anspruch 2 oder 3, **dadurch gekennzeichnet, dass** mehrere der Tripelspiegel in einer Reihe angeordnet sind und dass eine erste Teilfläche (13.3; 15.3) jedes der in der Reihe angeordneten Tripelspiegel mit den ersten Teilflächen (13.3; 15.3) der weiteren in der Reihe angeordneten Tripelspiegel fluchtet und mit diesen einen gemeinsame ebene Fläche bildet.

5. Retroreflektor nach einem der vorangehenden Ansprüche, **gekennzeichnet durch** eine Vielzahl von Tripelspiegeln mit bevorzugter Geometrie.

6. Retroreflektor nach Anspruch 5, **dadurch gekennzeichnet, dass** alle Tripelspiegel mit bevorzugter Geometrie identisch ausgebildet sind.

7. Retroreflektor nach Anspruch 5 oder 6, **dadurch gekennzeichnet, dass** die Tripelspiegel mit bevorzugter Geometrie in einem sich wiederholenden Muster angeordnet sind.

8. Retroreflektor nach einem der Ansprüche 5 bis 7, **dadurch gekennzeichnet, dass** alle Tripelspiegel Tripelspiegel mit bevorzugter Geometrie sind.

9. Retroreflektor nach einem der Ansprüche 5 bis 7, **dadurch gekennzeichnet, dass** eine erste Anzahl der Tripelspiegel Tripelspiegel mit bevorzugter Geometrie und eine zweite Anzahl der Tripelspiegel keine Tripelspiegel mit bevorzugter Geometrie sind.

10. Verwendung eines Retroreflektors nach einem der vorangehenden Ansprüche durch Anordnung des Retroreflektors auf einem Gegenstand (25.1) als Identifikationselement zur Identifizierung des Gegenstands.

11. Sensoranordnung mit einem Retroreflektor (24) nach einem der Ansprüche 1 bis 9, mit einer Lichtquelle (24.6) zur Aussendung von Licht auf den Retroreflektor (24) und mit einem Empfängersensor (24.7) zum Empfang von durch den Retroreflektor (24) retroreflektiertem Licht.

## Claims

1. Retroreflector having one or more triple mirrors (24.1), each triple mirror (24.1) having three partial surfaces (1.1, 1.2, 1.3; 3.1, 3.2, 3.3; 6.1, 6.2, 6.3; 7.1, 7.2, 7.3; 9.1, 9.2, 9.3; 11.1 , 11.2, 11.3; 17.1, 17.2, 17.3; 18.1, 18.2, 18.3; 20.1, 20.2, 20.3; 21.1, 21.2, 21.3), which adjoin one another in pairs at three dihedral edges and enclose dihedral angles of 90° ± 5° and touch one another in a triple mirror centre (1.4; 3.4; 6.4; 7.4; 9.4; 11.4; 17.4; 18.4; 20. 4; 21.4), wherein the retroreflector has a reflector body (24.9) made of translucent or semitransparent material, which has a reflective outer surface formed by the partial surfaces, wherein at least one of the triple mirrors is a triple mirror with preferred geometry, wherein the preferred geometry is defined in that in at least one partial surface (1.3; 3.2; 5.1; 7.3; 9.3; 11.3; 18.2; 20.2; 21.2) of each triple mirror with preferred geometry at least one optically active optical element (1.5; 3.5; 5.5; 7.5; 9.5; 11.5; 18.5; 20.5) is arranged, wherein each optical element (1.5; 3.5; 5.5; 7.5; 9.5; 11.5; 18.5; 20.5) is arranged at a distance from the dihedral edges, which delimit the partial surface (1.3; 3.2; 5.1; 7.3; 9.3; 11.3; 18.2; 20.2; 21.2), in which the relevant optical element (1.5; 3.5; 5.5; 7.5; 9.5; 11.5; 18.5; 20.5) is arranged, and wherein the reflecting outer surface faces away from a light entry surface (24.3) of the reflector body (24.9), **characterised in that** at least one of the optical elements (1.5, 3.5, 5.5, 7.5, 9.5, 11.5, 18.5, 20.5) is a depression in the reflecting outer surface and/or **in that** at least one of the optical elements (1.5, 3.5, 5.5, 7.5, 9.5, 11.5, 18.5, 20.5) protrudes from the reflecting outer surface and is integrally formed with the reflector body (24.9) and/or **in that** at least one of the optical elements (1.5, 3.5, 5.5; 7.5; 9.5; 11.5; 18.5; 20.5) is an optical lens, in particular a cylindrical lens.

2. Retroreflector according to claim 1, **characterised in that** the partial surfaces (1.1, 1.2, 1.3, 3.1, 3.2, 3.3, 6.1, 6.2, 6.3, 7.1, 7.2, 7.3, 9.1, 9.2, 9.3, 11.1, 11.2, 11.3, 17.1, 17.2, 17.3, 18.1, 18.2, 18.3, 20.1, 20.2, 20.3, 21.1, 21.2, 21.3) each have a quadrangular outline.

3. Retroreflector according to claim 2, **characterised in that** the partial surfaces (1.1, 1.2, 1.3, 3.1, 3.2, 3.3, 6.1, 6.2, 6.3, 7.1, 7.2, 7.3, 9.1, 9.2, 9.3; 11.1, 11.2, 11.3; 17.1, 17.2, 17.3; 18.1, 18.2, 18.3; 20.1, 20.2, 20.3; 21.1, 21.2, 21.3) each have a square outline, a rectangular outline, a trapezoidal outline or a dragon-shaped outline with two pairs of contiguous, equally long edges.

4. Retroreflector according to claim 2 or 3, **characterised in that** a plurality of triple mirrors are arranged in a row and that a first partial surface (13.3; 15.3) of each of the triple mirrors arranged in the row is flush with the first partial surfaces (13.3, 15.3) of the other triple mirrors in the row and forms a common flat surface with these.

5. Retroreflector according to any one of the preceding claims, **characterised by** a plurality of triple mirrors with preferred geometry.

6. Retroreflector according to claim 5, **characterised in that** all the triple mirrors with preferred geometry are configured identically.

7. Retroreflector according to claim 5 or 6, **characterised in that** the triple mirrors with preferred geometry are arranged in a repeating pattern.

8. Retroreflector according to any one of claims 5 to 7, **characterised in that** all the triple mirrors are triple mirrors with preferred geometry.

9. Retroreflector according to any one of claims 5 to 7, **characterised in that** a first number of the triple mirrors are preferred geometry triple mirrors and a second number of the triple mirrors are not triple mirrors with preferred geometry.

10. Use of a retroreflector according to any one of the preceding claims on an object (25.1) as an identification element for identifying the object.

11. Sensor arrangement comprising a retroreflector (24) according to any one of claims 1 to 9, with a light source (24.6) for emitting light to the retroreflector (24) and a receiver sensor (24.7) for receiving light retroreflected by the retroreflector (24).

## Revendications

1. Rétroréflecteur pourvu d'un ou de plusieurs miroirs triples (24.1), dans lequel chaque miroir triple (24.1) comporte trois surfaces partielles (1.1, 1.2, 1.3 ; 3.1, 3.2, 3.3 ; 6.1, 6.2, 6.3 ; 7.1, 7.2, 7.3 ; 9.1, 9.2, 9.3 ; 11.1, 11.2, 11.3 ; 17.1, 17.2, 17.3 ; 18.1, 18.2, 18.3 ; 20.1, 20.2, 20.3 ; 21.1, 21.2, 21.3) qui se rejoignent par paires sur trois arêtes dièdres et présentent des angles dièdres de 90° ± 5° et se rejoignent en un centre de miroir triple (1.4 ; 3.4 ; 6.4 ; 7.4 ; 9.4 ; 11.4 ; 17.4 ; 18.4 ; 20.4 ; 21.4), dans lequel le rétroréflecteur comprend un corps réflecteur (24.9) en matériau translucide ou partiellement transparent présentant une surface extérieure réfléchissante formée par les surfaces partielles,
dans lequel au moins l'un des miroirs triples est un miroir triple à géométrie préférée, dans lequel la géométrie préférée est définie par le fait qu'au moins un élément optique optiquement actif (1.5 ; 3.5 ; 5.5 ; 7.5 ; 9.5 ; 11.5 ; 18.5 ; 20.5) est disposé dans au moins une surface partielle (1.3 ; 3.2 ; 5.1 ; 7.3 ; 9.3 ; 11.3 ; 18.2 ; 20.2 ; 21.2) de chaque miroir triple à géométrie préférée,
dans lequel chaque élément optique (1.5 ; 3.5 ; 5.5 ; 7.5 ; 9.5 ; 11.5 ; 18.5 ; 20.5) est disposé de manière espacée des arêtes dièdres qui délimitent la surface partielle (1.3 ; 3.2 ; 5.1 ; 7.3 ; 9.3 ; 11.3 ; 18.2 ; 20.2 ; 21.2) dans laquelle est disposé l'élément optique (1.5 ; 3.5 ; 5.5 ; 7.5 ; 9.5 ; 11.5 ; 18.5 ; 20.5) concerné,
et dans lequel la surface extérieure réfléchissante est orientée à l'opposé d'une surface d'entrée de lumière (24.3) du corps réflecteur (24.9),
**caractérisé en ce qu'**au moins l'un des éléments optiques (1.5 ; 3.5 ; 5.5 ; 7.5 ; 9.5 ; 11.5 ; 18.5 ; 20.5) est un évidement ménagé dans la surface extérieure réfléchissante et/ou **en ce qu'**au moins l'un des éléments optiques (1.5 ; 3.5 ; 5.5 ; 7.5 ; 9.5 ; 11.5 ; 18.5 ; 20.5) dépasse de la surface extérieure réfléchissante et est formé d'un seul tenant avec le corps réflecteur (24.9) et/ou **en ce qu'**au moins l'un des éléments optiques (1.5 ; 3.5 ; 5.5 ; 7.5 ; 9.5 ; 11.5 ; 18.5 ; 20.5) est une lentille optique, en particulier une lentille cylindrique.

2. Rétroréflecteur selon la revendication 1, **caractérisé en ce que** les surfaces partielles (1.1, 1.2, 1.3 ; 3.1, 3.2, 3.3 ; 6.1, 6.2, 6.3 ; 7.1, 7.2, 7.3 ; 9.1, 9.2, 9.3 ; 11.1, 11.2, 11.3 ; 17.1, 17.2, 17.3 ; 18.1, 18.2, 18.3 ; 20.1, 20.2, 20.3 ; 21.1, 21.2, 21.3) présentent chacune un contour carré.

3. Rétroréflecteur selon la revendication 2, **caractérisé en ce que** les surfaces partielles (1.1, 1.2, 1.3 ; 3.1, 3.2, 3.3 ; 6.1, 6.2, 6.3 ; 7.1, 7.2, 7.3 ; 9.1, 9.2, 9.3 ; 11.1, 11.2, 11.3 ; 17.1, 17.2, 17.3 ; 18.1, 18.2, 18.3 ; 20.1, 20. 2, 20.3 ; 21.1, 21.2, 21.3) présentent chacune un contour carré, un contour rectangulaire, un contour trapézoïdal ou un contour en forme de dragon ayant deux paires d'arêtes adjacentes de même longueur.

4. Rétroréflecteur selon la revendication 2 ou 3, **caractérisé en ce que** plusieurs des miroirs triples sont disposés en rangée et **en ce qu'**une première surface partielle (13.3 ; 15.3) de chacun des miroirs triples disposés en rangée se situe au même niveau que les premières surfaces partielles (13.3 ; 15.3) des autres miroirs triples disposés en rangée et forme avec ceux-ci une surface plane commune.

5. Rétroréflecteur selon l'une des revendications précédentes, **caractérisé par** une pluralité de miroirs triples à géométrie préférée.

6. Rétroréflecteur selon la revendication 5, **caractérisé en ce que** tous les miroirs triples à géométrie préférée sont conçus de manière identique.

7. Rétroréflecteur selon la revendication 5 ou 6, **caractérisé en ce que** les miroirs triples à géométrie préférée sont disposés selon un motif répétitif.

8. Rétroréflecteur selon l'une des revendications 5 à 7, **caractérisé en ce que** tous les miroirs triples sont des miroirs triples à géométrie préférée.

9. Rétroréflecteur selon l'une des revendications 5 à 7, **caractérisé en ce qu'**un premier nombre de miroirs triples sont des miroirs triples à géométrie préférée et un second nombre de miroirs triples ne sont pas des miroirs triples à géométrie préférée.

10. Utilisation d'un rétroréflecteur selon l'une des revendications précédentes par agencement du rétroréflecteur sur un objet (25.1) en tant qu'élément d'identification destiné à identifier l'objet.

11. Système de capteur comprenant un rétroréflecteur (24) selon l'une des revendications 1 à 9, une source de lumière (24.6) destinée à émettre de la lumière vers le rétroréflecteur (24) et un capteur récepteur (24.7) destiné à recevoir la lumière rétroréfléchie par le rétroréflecteur (24).
